# EUROPEAN PATENT SPECIFICATION

(11) **EP 3 191 752 B1**
(45) Date of publication and mention of the grant of the patent: **15.04.2020**
(21) Application number: 15762705.0
(22) Date of filing: 03.08.2015
(51) Int. Cl.: F16K 31/06

(54) **SOLENOID VALVE WITH BALANCING ROD AND ANGLED CONNECTIONS**
MAGNETVENTIL MIT AUSGLEICHSSTAB UND WINKLIGEN VERBINDUNGEN
ÉLECTROVANNE À TIGE D'ÉQUILIBRAGE ET LIAISONS INCLINÉES

(30) Priority: 06.08.2014 IT MI20141441
(43) Date of publication of application: 19.07.2017
(73) Proprietor: Ode S.r.l., 23823 Colico (LC) (IT)
(72) Inventor: GHIGGI, Mauro, I-23029 Villa di Chiavenna (SO) (IT)
(74) Representative: Riccardi, Sergio
(86) International application number: PCT/IB2015/001334
(87) International publication number: WO 2016/020746

(56) References cited:
- WO-A1-98/26168
- GB-A- 1 122 316
- US-A- 5 048 790
- US-B1- 6 345 870

## Description

The present invention relates to the field of solenoid valves, more particularly solenoid valves with direct command and most preferably the valves using balancing rods.

It is well known that direct command solenoid valves are used in the most diversified sectors and are extremely widespread in view of their great versatility of use.

More particularly the direct command solenoid valves include either normally closed or normally open solenoid valves.

For instance, among the traditional fields of use of direct command solenoid valves, for the objects of the present invention there is a particular interest in the field of fluid controls, such as water, or fluidic foodstuffs like syrups, or even in the petrochemical sector. Anyway these valves may be used also in the pneumatic and chemical sector. With particular reference to the field of controlling passage of fluids, like in the alimentary sector, normally closed or normally open solenoid valves with direct command are well known and widespread.

With regard to the direct command solenoid valves, it is known that these solenoid valves have rather limited flow rates, thus their performances are limited by the flow rate and the poor pressure attained by the processed fluid.

Consequently to increase the flow rate of the solenoid valve, it is necessary to supply higher feeding powers to the coil, with related increase of energy consumption and corresponding costs.

Moreover in this kind of valves a greater wear of the sealing surfaces, such as orifices and gaskets, is often recurring.

More particularly, for instance in a normally closed two-way solenoid valve, the operative pressure is dependent from and proportional to the orifice area, so that in any case the attainable pressures are limited and determined by the orifice diameter (with the same coil power).

In addition, in a direct command two-way solenoid valve, the movement of the movable core (moved by the coil energization generating a magnetic force acting on the movable core) corresponds to opening or closing an orifice. Therefore, if high flow rates are required, a large movement of the movable core and a broad orifice are required (since large movements correspond to large flow rates), thus it is necessary to provide for a large movement of the movable core, with consequent increase of the coil power and corresponding increase of the magnetic force. Therefore it is apparent that to have considerable flow rates, it is necessary to increase correspondingly the coil power, with consequent heavy economic burden.

Consequently it results that the maximum operative pressure of the solenoid valve is depending not only upon the orifice diameter, that is the fluid flow rate, but also upon the magnetic force that can be generated by the coil.

For this reason it is possible to attain high flow rates and high operative pressures only by increasing considerably both the coil power and the dimensions of the relevant magnetic circuit.

The above mentioned problems, were solved by a solenoid valve with balancing rod disclosed by the same Applicant in a preceding Italian patent application MI2012A000379 (now patent IT 1410423), in which a direct command solenoid valve is disclosed, that can work under conditions of high maximum pressures and high flow rates, because the pressure balance generated at closed valve allows to have a thrust area on which an almost null pressure is acting, that is important to increase the valve working pressures.

Said solenoid valve may also be advantageously configured as either normally closed or normally open. An object of said prior disclosure was to make a direct command normally open solenoid valve, adapted to operate under both compression and traction. Moreover said valve is a direct command that may be used to control any kind of fluids such as liquids, gases, steam and even in any environment, such as the alimentary field, including also potentially explosive environments (when provided with a suitable protection cap). Said solenoid valve according to the above mentioned prior disclosure, comprises a balancing rod and passages between chambers and discharge ducts not requiring now a detailed description, as they were already illustrated adequately in the above cited prior disclosure.

Upon implementation of the above cited innovative solenoid valve with balancing rod, although the technical problem was solved by its innovative solution, Applicant found that such a solenoid valve comprised a considerable number of components, leading to a not negligible assembling difficulty, both for a correct positioning of the components and for the assembling time required. Moreover both quantity and type of said components for manufacturing these innovative solenoid valves, though achieving good performances, are definitely expensive.

Moreover, in view of the complexity and interaction of the parts, it was particularly difficult and challenging to make different kinds of passages and orifices for the fluids, so that the number of possible variations for flow rates, powers, diameters and the like is rather small, to the detriment of versatility of use and implementation according to the customer's requirements. One of the aspects aggravating the range of components consists of the side channels of connection between the upper and lower chamber and the discharge duct; although these channels are particularly innovative and advantageous, they oblige to use a number of gaskets and other contrivances to obtain the best tightness, leading to the above mentioned limitations.

With regard to the above listed technical problems, reference may be had to another application (N. PCT/IB 2015/001326) filed by Applicant on the same date hereof, disclosing a solenoid valve with in-line balancing rod, constituting an innovative technical solution to the above mentioned technical problems. Such a solenoid valve allows to achieve several advantages from the point of view of greater assembling easiness, reduction of costs and versatility of use with the possibility of implementing a broad range of valves with different flow rates and pressures, still keeping the above mentioned innovative technical advantages. Moreover this further innovative solution allows to make direct command valves adapted also for explosive environments, since the blow-by problems are totally eliminated. Other advantages are described with the required detail in the above cited application for a solenoid valve with in-line balancing rod of the same Applicant, briefly summarized hereinbefore.

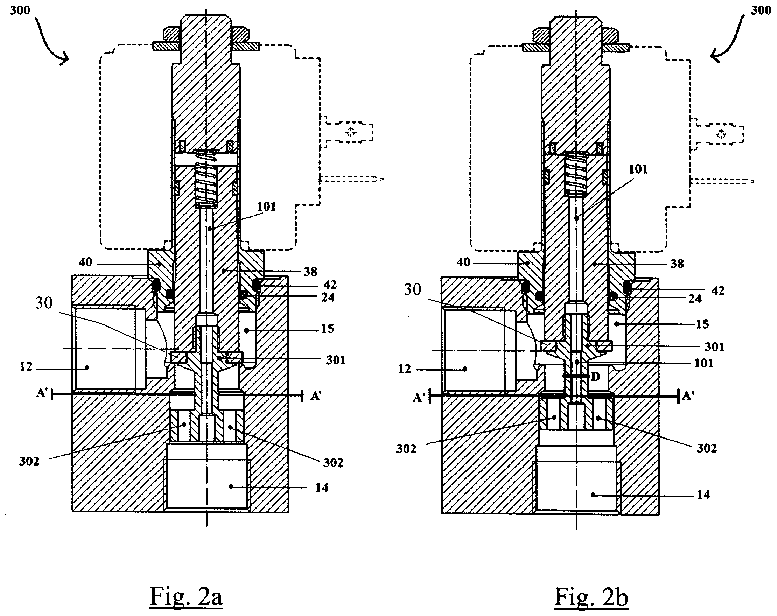

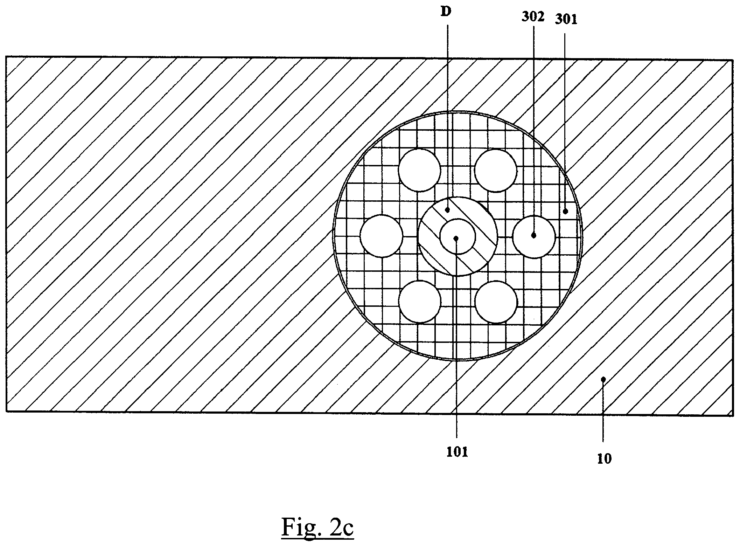

Prior art devices solving some but not all the mentioned problems, drawbacks or combinations are for instance discussed in document WO/9826168 A1 disclosing a normally closed two-way direct command solenoid valve with inlet and outlet ducts advantageously arranged at right angles, with reduced dimensions and sufficiently performing operation. Pressure balance occurs through two orifices with good performances, but the presence of two orifices here allowing to balance pressures, complicates the valve construction, because to warrant the contemporaneous tightness of orifices is a definitely complex operation, requiring a number of additional components and very accurate adjustments. For instance some additional elements, with reference to the more detailed view of Fig. 2 and to Fig. 7, obviously are a second upper orifice, a gasket 330 for said orifice, where the gasket 330 is mounted in a sealing position on an upper separation ring 78 (not shown in Figure 7 but present), and to warrant tightness there are additional components such as O-rings 94 or 92, 82, 90 (not shown in Fig. 7 but substantially present) and a basket 86 (corresponding to numeral 386 in Fig. 7) with orifice 80 (numeration referred to Fig. 2, corresponding to elements of Fig. 7 without reference numerals).

It is to be pointed out that reduction in the number of components allows advantageously to reduce costs, maintenance and failures with advantageous effects on quality and operation of the product.

Moreover said valve operates with a stop ring 340 that does not allow a mutual contact of fixed core and movable core. The absence of contact between the two ferromagnetic elements, combined with the absence of the copper ring, does not allow a valve operation under alternate current. Would the valve be fed with alternate current, said valve would not work correctly because it would not remain normally closed.

Another example of prior art valve with orthogonal ducts is disclosed in document US 6345870 B1 illustrating a normally closed two-way direct command solenoid valve, also comprising outlet ducts at right angles coaxial with the valve pilot system, where said valve does not comprise a gasket and a pressure balancing rod, that does not allow to have a force as close as possible to zero force, so that said valve cannot have high flow rates and/or performances and in any case any pressure balance which would be required to develop the advantageous effects that are intended to be the object of the present invention. In addition, absence of the copper ring does not allow an alternate current operation.

Finally document GB 1122316 discloses a normally closed or normally open two-way direct command solenoid valve comprising a duct 71 for discharging possible sealing leaks, the pressure balance being carried out through a bellows gasket making the valve body adapted for disposing apparently at right angles the outlet and inlet channels, but said ducts 3 and 5 may actually be only disposed in-line, namely outlet cannot be coaxial with the pilot kit because this kit is just disposed in the position where the outlet duct should be located.

The object of the present invention that will be now illustrated hereinafter, is to disclose a further particularly innovative technical development concerning the operative system described in the above cited application of the same Applicant filed on even date hereof. In this connection it is to be particularly pointed out that said cited application refers to solenoid valves with in-line balancing rods, in other words the particularly advantageous technical solution is applied and developed only on solenoid valves with inlet/outlet in-line connection.

The object of the present invention instead is to obtain the same technical advantages, but to develop innovative solenoid valves with angled connections substantially at right angles or in any case eccentrically, with an angle between inlet and outlet channels to cause a substantial deviation relative to the linear direction of the incoming or outgoing flow.

More particularly it is to be noted that, if the same solenoid valve with in-line balancing rod should be produced, as it appears clearly from the annexed drawings, and said valve would theoretically be made with connections at right angles, this would clearly involve room problems. It is well known that these solenoid valves are often used in environments with limited space availability, so that it is a definitely problematic aspect the necessity of increasing considerably the room occupied by said solenoid valve, in order to arrange conveyance of outgoing flow in a direction orthogonal to the inlet, as it will be represented hereinafter.

With reference to the above discussed prior art documents, more particularly document WO 98/26168 A1, the object of the present invention is to keep all the advantageous effects of optimizing flow rates, pressures and performances described in the present application as well as in the application concerning the solenoid valve with in-line connection rod, jointly with the implementation of a solenoid valve with connections at right angles, comprising a reduced number of components, in order to lighten the valve structure, make prompter its operation, performing, easy to be maintained and economically advantageous in its manufacture, and adapted to operate in both direct and alternate current, just as the previous valve developed by the same Applicant, which is to be taken as a basis of development of the present invention.

As to the technical problems and the innovative solutions being the subject matter of the present invention, reference should be made to the following description of the figures of the drawings, which is essential since the solution of the technical problem concerns the other parallel invention not yet available to a man skilled in this art. In any case, in order to be able to implement a valve with the here described innovative features, it would be necessary to provide said valve with a system of channels adapted to convey the flow under the desired angle.

In addition, as it will be described in detail more clearly in the annexed drawings, said further components would clearly involve not negligible additional costs. Moreover implementation of these components and their assembly would involve definitely extended times with an inevitable fall of greater costs both for manufacturing and assembling the components. It is clear that this is absolutely disadvantageous not only from the economic point of view, but in an even more relevant way from the technical point of view: indeed the valve, although being advantageous for the reasons explained for the in-line embodiment, in order to keep the same inventive technical features, would have definitely excessive dimensions, that would not allow the adoption of such an innovative solution, when the solenoid valves useful for applicative purposes would not be in-line solenoid valves.

It is to be noted that the same technical problems would be encountered trying to adopt a solution with substantially orthogonal connections also for the previous invention of the same Applicant that was cited hereinbefore as an example of prior art most significant for the development of the solenoid valve with innovative in-line balancing rod subsequently implemented by Applicant.

In any case, an object of the present invention is to provide for a solenoid valve with connections having a variable mutual angularity other than the in-line orientation, as well as reduced dimensions, still keeping all the innovative technical advantages of the repeatedly cited solenoid valves with in-line balancing rod of the other invention filed by Applicant on even date hereof.

Thus it is apparent that a further object is the provision of a performing solenoid valve having limited dimensions and an adequate cost for a widespread commercial exploitation.

Still a further object of the present invention, together with a cost reduction, is to optimize the variations and versatility of use for various applications of the solenoid valve.

Another object of the present invention is to provide for a solenoid valve with balancing rod allowing to achieve numerous dimensions and flow rates, that can be easily fitted to various installation requirements.

A further object of the present invention is to provide for a solenoid valve with balancing rod having the above mentioned advantages and connections at least at right angles, which is performing and can be used in any environment even of explosive nature.

These and other objects will be achieved by the solenoid valve of the invention, with balancing rod and direct command, normally closed or normally open, and with connections forming an angle substantially different from 180 degrees, preferably said connections having a substantially mutual angle, and most preferably said connections define an angle of 90 degrees.

Said valve generally comprises a main body, in which an inlet duct and an outlet duct are made, a system including a movable core, a fixed core and a coil, at least a balancing rod and gaskets for sliding and tightening said balancing rod, said valve comprising a central discharge channel made in the movable core and the balancing rod, and said balancing rod comprises the inventive feature of at least a calibrated passage or a plurality of calibrated holes, thus allowing passage of fluid from the inlet channel to the outlet channel with an angle as above defined.

By changing the number and/or the diameter of said holes, variation of flow rate is achieved, as it occurs alternatively by varying the passage flow rate.

Still according to the present invention, the valve system comprises at least a central discharge channel made in the movable core and in the balancing rod of said solenoid valve, in a particularly advantageous and innovative way therefore the solenoid valve according to the present invention maintains its particularly innovative and performing characteristics, as described for the innovative direct command in-line solenoid valve.

These and further advantages of the solenoid valve with connections substantially forming a variable angle preferably of 90 degrees, will become apparent from the figures of the accompanying drawings and the related description, in which:
Figs. 1a and 1b show a solenoid valve not being part of the present invention with in-line balancing rod and simulated fitting at 90 degrees;
Figs. 2a, 2b show an illustrative preferred embodiment of the solenoid valve with balancing rod according to the present invention;
Fig. 2c shows the balancing rod of the embodiment of Figs. 2a and 2b;
Figs. 3a, 3b show a further embodiment of the solenoid valve according to the present invention; and
Fig. 3c shows the balancing rod of the embodiment of Figs. 3a and 3b.

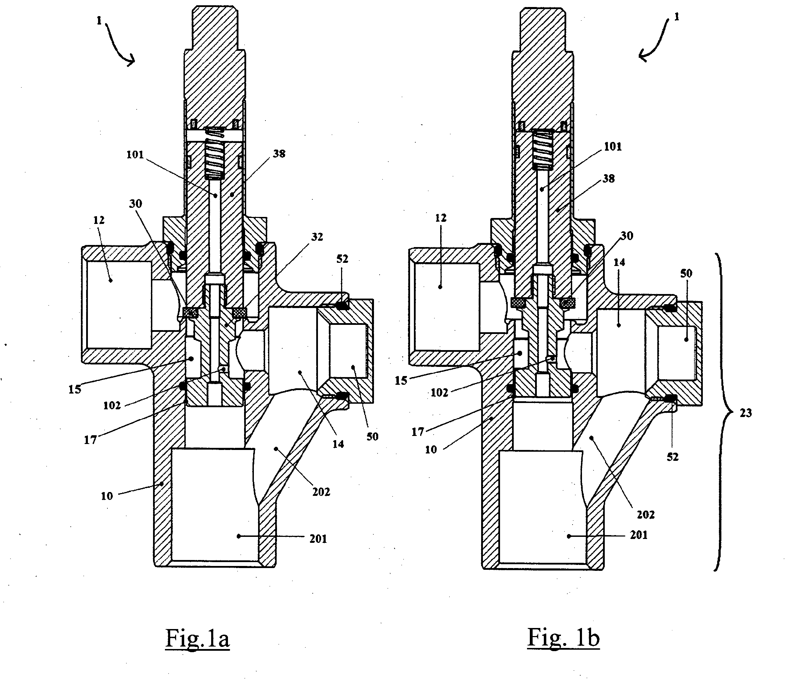

With reference to Figs. 1a and 1b, the innovative in-line solenoid valve is shown, having a balancing rod 32 comprising said central discharge channel 10 made in movable core 38 and balancing rod 32, assembled with further components, when said solenoid valve should be provided with connections e.g. at 90 degrees. It is known that in all the applicative fields listed in the introductory part of the description, it is a very frequent option the possibility of producing a solenoid valve with connections at right angles, that is absolutely required in all those occurrences when for various reasons the inlet channel 12 and outlet channel 14 are not aligned or do not form an angle substantially of 180 degrees. More particularly Fig. 1a is a cross-sectional view of a first example of a normally closed direct command solenoid valve in the condition of de-energized coil, i.e. closure, with outlet channel fitting at 90 degrees, and Fig. 1b is a cross-sectional view of the solenoid valve of Fig. 1a shown in the condition of energized coil, i.e. open, with the same fitting. It is also to be noted that, although the same components used for the mentioned solenoid valves with in-line balancing rod are maintained, in order to convey the flow outgoing from channel 14 in a substantially orthogonal direction, or in any case inclined at a given angle relative to channel 12, a complex system of ducts 201 is required, connected to said outlet channel 14 through a hole system acting as passage channel 202. Therefore it is necessary to make an additional portion of the valve body 10, namely a part of valve body comprising a system of ducts, channels, connections and drillings allowing to convey the flow coming from the outlet channel 14 as desired. Moreover plug 50 should be moved together with the annexed sealing gasket 52, thus increasing the occupied space.

It is immediately clear that such a system is definitely cumbersome, obviously to the detriment of an easy positioning of said solenoid valve 1. Use of a valve with such a design would be hardly feasible, since it is common knowledge for the experts in this area, that the space available for positioning the solenoid valves in this field is definitely reduced.

Moreover the additional components would have a high cost, to the detriment of one of the above described most appreciated commercial advantages which are object of the present invention, in addition to the illustrated technical advantages.

In figures 2a and 2b, a preferred embodiment of the solenoid valve 300 is shown, with a balancing rod having a central channel 101 and inlet 12/outlet 14 channels substantially at right angles to each other, as illustrated for example in the present preferred embodiment. More particularly Fig. 2a is a cross-sectional view of a first preferred embodiment of a solenoid valve 300 according to the present invention, shown in the condition of de-energized coil, i.e. of closure, with an outlet channel substantially at right angles, and Fig. 2b is the cross-sectional view of the solenoid valve of Fig. 2a shown in the condition of energized coil, that is open. The here illustrated solenoid valve 300 advantageously keeps the innovative components comprising movable core 38, shutter 30, sleeve 40 and gasket 24 placed on said sleeve 40, and central discharge channel 101 annexed to the outlet channel 14. However said solenoid valve 300 in a further advantageous way for the present invention, comprises a new design of balancing rod 301 including calibrated holes 302, shown in greater detail in Figure 2c. By varying the number and/or the diameter of said holes 302, variation and regulation of the flow rate is achieved. The here described innovative balancing rod 301 therefore allows to obtain the pressure balance advantageously regulated like for the similar system developed for the solenoid valves with in-line balancing rod, which however, as it appears clearly from the description and the annexed Figures 1a and 1b, is absolutely incompatible with a solenoid valve having substantially orthogonal connections. Thanks to the here described innovative balancing rod 302, it is possible to eliminate completely the complex drilling system that would otherwise be required, including the above described related drawbacks.

The difference of surface between the movable core 38 and the lower portion of the balancing rod 301 deducted the surface of holes 302, advantageously causes the resulting force to be balanced, and therefore pressure variations, do not alter the acting force. More particularly, with reference also to Fig. 2c, which is a cross section of said innovative balancing rod 301 with said holes 302, said holes 302 are suitably calibrated to warrant a thrust generated by pressure on surface A (defined by the section A'-A') equivalent to the thrust generated by surface B corresponding to the sealing diameter of movable core 38 with gasket 24. Calibration of holes 302, multiplied by the number of holes made on the rod, in addition to producing the above cited thrust, serves also to regulate the flow rate, thus re-creating the surface for flow passage, operation that is normally carried out by regulating the passage 32 for the flow coming from orifice 15. In particularly preferred embodiments said plurality of holes may correspond to five, six or eight holes.

Therefore the flow passes from channel 12, through a system consisting of balancing rod 301 and holes 302, into the outlet channel 14, arranged in this embodiment in a direction substantially orthogonal to the development line of the inlet channel 12. In this way it is clear that the valve body 10 keeps substantially the same dimensions, and besides avoiding to add expensive and complex components, in a further advantageous way plug 50 and the related gasket 52 (see Figs. 1a and 1b) are also eliminated.

It is to be noted that this allows, in a very advantageous way, even to reduce the dimensions of the valve body 10 in comparison with the solenoid valve with in-line balancing rod with central duct, and the further elimination of components simplifies to a greater extent the process of manufacturing and assembling said innovative valve with substantially orthogonal connection. An expert in this field may recognize that this invention here illustrated in the present advantageous embodiment, allows to simplify the drilling and mounting system, the overall dimensions of the assembled components and the finish of details.

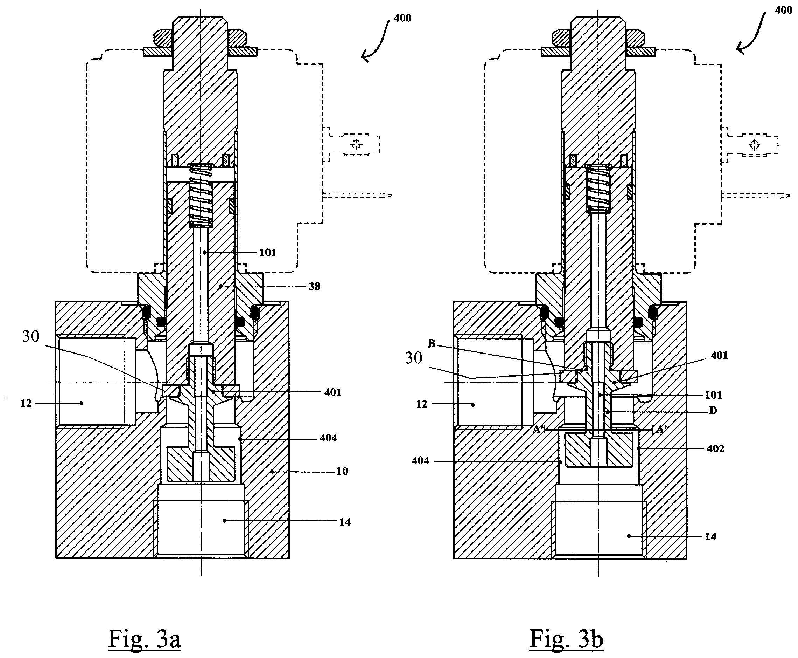

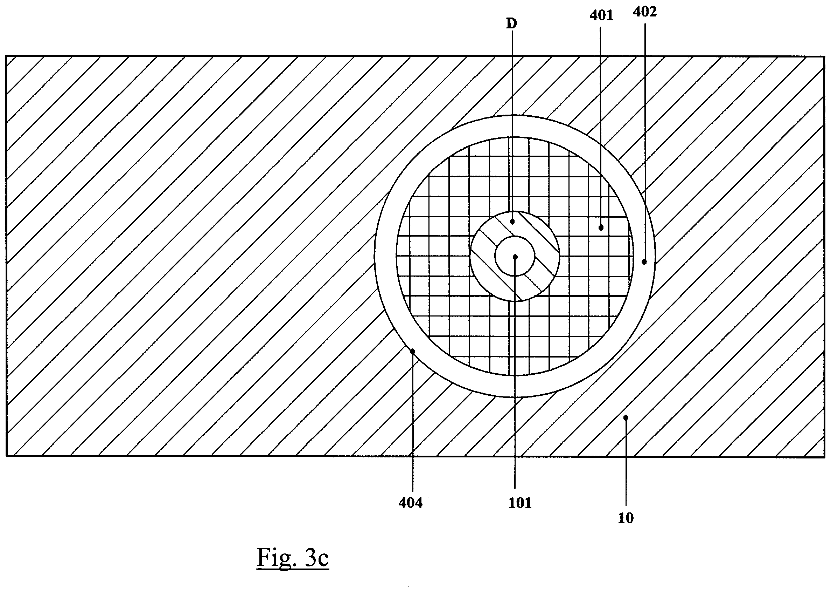

In Figures 3a and 3b a further particularly preferred embodiment of solenoid valve 400 is shown, with balancing rod having a central channel 101 with inlet 12 / outlet 14 channels substantially orthogonal to each other (as illustrated for example in the present preferred embodiment). More particularly Figure 3a is a cross-sectional view of a first preferred embodiment of a solenoid valve 400 according to the present invention, shown in the condition of de-energized coil, i.e. closure, with outlet channel substantially at right angles, and Fig. 3b is a cross-sectional view of the solenoid valve of Fig. 3a, but shown in the condition of energized coil, i.e. open. Also this embodiment here illustrated allows advantageously to keep and exploit the various technical advantages given by the innovative components, comprising movable core 38, shutter 30, sleeve 40 and gasket 24 placed on said sleeve 40, and central discharge channel 101 annexed to the outlet channel 14. Said solenoid valve 400 further comprises, in a more advantageous way for the purposes of the present invention, another innovative type of balancing rod 401, shown in greater detail in Fig. 3c. Said balancing rod 401, in a further advantageous way, does not comprise a plurality of holes, but for the flow passage the bottom diameter of said balancing rod 401 is smaller than the diameter of a seat 404 of said balancing rod. In this way a passage area 402 is created, which suitably calibrated allows to give a thrust generated by the pressure on surface A (see section A'-A') equivalent to the thrust generated by surface B corresponding to the sealing diameter of movable core 38 with gasket 24. Figure 3c shows a section of said balancing rod 401, where between the lower portion of said balancing rod and the valve body 10 one can see said suitably calibrated passage area 402 (indicated also as flow rate radial annulus 402). At the center one can see the passage channel 101 and the reduced diameter D, broadly described in the application related to the innovative solenoid valve with in-line balancing rod filed by Applicant on the same date hereof. It is to be noted that this second embodiment with flow rate radial annulus 402, further simplifies the production, since it is no more necessary to make holes in the balancing rod, but it is simply sufficient to modify the diameter to leave a suitable flow rate radial annulus 402, which may be defined according to the production requirements, without being constrained by external components that make difficult the implementation of several preferred embodiments for different flow rates or pressures. This is also applicable to the preferred embodiment of solenoid valve 300 with substantially orthogonal mutual connections, comprising flow rate holes 302 in said balancing rod.

It has to be noted that these and other preferred embodiments, in which solenoid valves with balancing rod made in a particularly advantageous way are described, comprising at least a central passage channel in said balancing rod, wherein for example more central channels are comprised, with any desired dimensions, diameter and flow rates, or even variations in the definition of the forms of flow passage inlet / balancing rod / outlet, are in any case falling in the object of the present invention, since they are based on the above described same inventive concept.

These are only some of preferred and possible embodiments of the solenoid valve with balancing rod provided with central discharge channel and connections substantially at right angles according to the present invention, and it is to be noted that the inventive solution may be applied also to angularities of connections between inlet and outlet different from 90 degrees, as mentioned in the description. For instance, the inlet duct or the other duct, or any further duct downstream or upstream said ducts, may be made with angles of inclination adapted for the applicative object of the solenoid valve when implemented according to the present invention.

Further variations in which the elements of the system are coupled in different ways, by engagement, joint, elements constituting lever, fulcrum, fulcrum rod, or isolating elements such as O-rings and the like may have alternative forms or positions, as well as the balancing rod may have different forms, but in any case adapted for the described object of the present invention, or materials of any kind, or every modification that in any case falls within the object described by the present invention, should be considered as alternatives to the previously described preferred embodiments, wherein changes and modifications concerning for instance the geometries chosen for the single movable and fixed elements, the materials adopted for each member, and even the specifications of the operative system, may be resorted to without however departing from the scope of protection of the present invention as defined in the appended claims.

## Claims

1. A solenoid valve (300,400) with direct command normally closed or normally open, adapted to work with both direct and alternate current, comprising:
a main body (10), provided with an inlet channel (12) for a fluid, an outlet channel (14) for discharging of said fluid, an orifice (15) between said inlet and outlet;
a shutter of said orifice (15);
a movable elongated core (38) having a first end connected to said shutter;
a further elongated balancing rod (301,401), having at least one calibrated passage area (302, 402), a first end connected to said shutter and a second end moving in a passage formed in said main body (10) and having the axis parallel to the axis of said orifice (15);
and a central discharge channel (101) made in the movable core (38) and the balancing rod (301, 401) and in fluid communication with the outlet channel (14);
said outlet channel (14) being substantially angled with respect to said inlet channel (12),
**characterized in that**
said solenoid valve further comprises a gasket (24) disposed directly between a sleeve (40) and the movable core (38), to increase the dimensions of orifice (15) and consequently increase the flow rate of the valve, said orifice (15) together with said gasket (24) being adapted to maintain the pressure balance in opening said valve (300,400) and limit fluid losses, said gasket (24) sealing said movable core (38) against leaks, keeping balanced the pressures acting on said movable core (38) relative to those acting on the balancing rod (301, 401) in the closure stage,
and **in that** the flow passes from the inlet channel (12), through a system consisting of the balancing rod (301) including the calibrated passage area in the form of calibrated holes (302), into the outlet channel (14), the calibrated holes (302) being arranged in a direction substantially orthogonal to the development line of the inlet channel (12), or through the system consisting of said balancing rod (401) not comprising a plurality of holes, but for the flow passage the bottom diameter of said balancing rod (401) is smaller than the diameter of a seat (404) of said balancing rod.

2. The solenoid valve (300,400) with direct command according to claim 1, wherein said at least one calibrated passage area is constituted by a plurality of holes (302).

3. The solenoid valve (300,400) with direct command according to claim 1, wherein said calibrated passage area (402) is a radial flow ring (402).

4. The solenoid valve (300,400) with direct command according to claim 3, wherein said radial flow ring (402) has an extension smaller than the extension of a housing (404) for said balancing rod, that is arranged depending on the required flow.

5. The solenoid valve (300,400) with direct command according to claim 3, wherein said radial flow ring (402) has an extension smaller than the extension of the seat (404) for said balancing rod, that is arranged depending on the required passage pressure.

6. The solenoid valve (300,400) with direct command according to claim 2, wherein the number of said plurality of holes (302) is arranged depending on the required flow rate.

7. The solenoid valve (300,400) with direct command according to claim 2, wherein the diameter of said plurality of holes (302) is arranged depending on the required the flow rate.

8. The solenoid valve (300,400) with direct command according to claim 2, wherein said plurality of holes is calibrated to ensure a thrust generated by the pressure on a surface (A) on the lower portion of the balancing rod (301) equivalent to the thrust generated by a surface (B), corresponding to the sealing diameter of the movable core (38) comprising the gasket (24).

9. The solenoid valve (300,400) with direct command according to claim 1 suitable for use in explosive environments.

## Patentansprüche

1. Direktsteuermagnetventil (300, 400) mit Ein-/Auslassnormalstellung und Gleich-/Wechselstrombetrieb und einem Hauptkörper (10), enthaltend: eine Flüssigkeitseinlassleitung (12), eine Flüssigkeitsabflussleitung (14), eine Öffnung (15) zwischen diesen Leitungen, einen Verschluss dieser Öffnung (15), einen länglichen Spulenkern (38) mit einem an den besagten Verschluss verbundenen Ende, einen länglichen Ausgleichsstab (301, 401) mit einem ersten an den besagten Verschluss verbundenen Ende und einem zweiten Ende, das in einem Durchlass gleitet, wobei dieser Durchlass im Hauptkörper (10) gewonnen wird und eine der Achse der Öffnung (15) parallellaufende Achse aufweist, sowie eine mittige Abflussleitung (101), die im Spulenkern (38) und im Ausgleichsstab (301, 401) gewonnen wird und mit dem Abflussleitung (14) in flüssiger Verbindung steht, wobei diese Abflussleitung (14) gegenüber der Einlassleitung (12) eine winklige Lage aufweist, **dadurch gekennzeichnet, dass** dieses Ventil weiter eine Dichtung (24) hat, die unmittelbar zwischen einem Rohr (40) und dem Spulenkern (38) angeordnet ist, um den Umfang der Öffnung (15) also den Ventildurchsatz zu erhöhen, wobei die Öffnung (15) zusammen mit der Dichtung (24) zur Erhaltung der Druckausgleichung am Ventilöffnen und zur Einschränkung der Flüssigkeitsleckage am Ventilschliessen geeignet ist, da die Dichtung (24) den Spulenkern (38) versiegelt und die Ausgleichung des auf den Spulenkern (38) wirkenden Drucks gegenüber dem auf den Stab (32, 301, 401) wirkenden Druck am Ventilschliessen erhält, und dass die Flüssigkeit von der Einlassleitung (12) bis die Abflussleitung (14) fliesst, und zwar entweder durch eine Anordnung bestehend aus dem den von kalibrierten Löchern (302) hergestellten Durchlass enthaltenden Ausgleichsstab (301), wobei die kalibrierten Löcher (302) nach einer der Ausdehnung der Einlassleitung (12) ungefähr senkrechten Richtung angeordnet sind; oder durch eine Anordnung bestehend aus einem keine Löcher enthaltenden Ausgleichsstab (401), aber um den Flüssigkeitsdurchlass zu gestatten, ist der Fussdurchmesser des Ausgleichsstabs (401) weniger als der Durchmesser einer Aufnahme (404) des Ausgleichsstabs.

2. Direktsteuermagnetventil (300, 400) nach Anspruch 1, worin zuminest ein kalibrierter Durchlass aus einer Anzahl von Löchern (302) besteht.

3. Direktsteuermagnetventil (300, 400) nach Anspruch 1, worin der kalibrierte Durchlass ein Durchsatzradialring (402) ist.

4. Direktsteuermagnetventil (300, 300) nach Anspruch 3, worin der Radialring (402) einen Umfang hat, der weniger als der Umfang einer Aufnahme (404) für den Ausgleichsstab und nach dem nötigen Durchsatz veränderlich ist.

5. Direktsteuermagnetventil (300, 400) nach Anspruch 3, worin der Radialring (402) einen Umfang hat, der weniger als der Umfang der Aufnahme (404) für den Ausgleichsstab und nach dem nötigen Durchlassdruck veränderlich ist.

6. Direktsetuermagnetventil (300, 400) nach Anspruch 2, worin die Anzahl von Löcher (302) nach dem nötigen Durchsatz veränderlich ist.

7. Direktsteuermagnetventil (300, 400) nach Anspruch 2, worin der Durchsatz nach der Änderung des Durchmessers der Anzahl von Löchern (302) verändert und verstellt wird.

8. Direktsteuermagnetventil (300, 400) nach Anspruch 2, worin die Anzahl von Löchern kalibriert wird, um derart zu erhalten, dass eine vom Druck auf eine Fläche (A) erzeugte Schubkraft auf den unteren Teil des Ausgleichsstabs (301), gleichwertig der Schubkaft von einer dem die Dichtung (24) enthaltenden Dichtungsdurchmesser entsprechenden Fläche (B) ist.

9. Direktsteuermagnetventil (300,400) nach Anspruch 1, der für die Anwendung in Explosivumgebungen geeignet ist.

## Revendications

1. Électrovanne (300, 400) à commande directe, normalement fermée ou normalement ouverte, apte pour le travail à courant continu et alternatif, comprenant un corps principal (10), dans lequel on a tiré un conduit d'aspiration (12) du fluide, un conduit (14) d'évacuation du fluide, un orifice (15) entre lesdits conduits d'aspiration et d'évacuation, un tournant du dit orifice (15), un noyau mobile (38) allongé avec une première extrémité connectée au dit tournant, une tige d'équilibrage (301, 401) allongée, ayant une première extrémité connectée au dit tournant et une deuxième extrémité glissant dans un passage formé dans le dit corps principal (10), avec son axe parallèle à l'axe du dit orifice (15), et un conduit central d'évacuation (101) formé dans le noyau mobile (38) ainsi que dans la tige d'équilibrage (301, 401) et en communication fluidique avec le conduit d'évacuation (14), le dit conduit d'évacuation étant essentiellement incliné par rapport au dit conduit d'aspiration (12), **caractérisée en ce que** la dite électrovanne comprend aussi un joint (24) disposé directement entre un fourreau (40) et le noyau mobile (38), pour augmenter les dimensions de l'orifice (15), donc le débit de la vanne, le dit orifice (15) avec le joint (24) étant apte à garder l'équilibrage des pressions en ouverture de la vanne (300, 400) et contenir les pertes du fluide, le dit joint (24) scellant le dit noyau mobile (38) par rapport aux fuites, en gardant l'équilibrage des pressions agissant sur le noyau mobile (38) en comparaison des pressions agissant sur la tige (32, 301, 401) dans la phase de fermeture ; et **en ce que** le fluide passe du conduit d'aspiration (12) par un système consistant dans la tige d'équilibrage (301) incluant la surface calibrée de passage sous la forme des trous calibrés (302), dans le conduit d'évacuation (14), les trous calibrés (302) étant disposés dans une direction essentiellement orthogonale à la ligne de développement du conduit d'aspiration (12), ou par un système consistant dans la tige d'équilibrage (401) sans la pluralité des trous, toutefois pour le passage du fluide, le diamètre de pied de la tige d'équilibrage (401) est inférieur au diamètre d'un logement (404) de la dite tige d'équilibrage.

2. Électrovanne (300, 400) à commande directe selon la revendication 1, dont ladite surface calibrée de passage est formée par une pluralité des trous (302).

3. Électrovanne (300, 400) à commande directe selon la revendication 1, dont ladite surface calibrée de passage est un anneau radial de débit (402).

4. Électrovanne (300, 400) à commande directe selon la revendication 3, dont ledit anneau radial de débit (402) a une étendue, inférieure par rapport à l'étendue d'un logement (404) de ladite tige d'équilibrage, qui est variable selon le débit demandé.

5. Électrovanne (300, 400) à commande directe selon la revendication 3, dont ledit anneau radial de débit (402) a une étendue, inférieure par rapport à l'étendue d'un logement (404) de ladite tige d'équilibrage, qui est variable selon la pression de passage demandée.

6. Électrovanne (300, 400) à commande directe selon la revendication 2, dont le nombre de ladite pluralité des trous (302) est variable selon le débit demandé.

7. Électrovanne (300, 400) à commande directe selon la revendication 2, dont le débit est varié et réglé selon la variation du diamètre de ladite pluralité des trous (302).

8. Électrovanne (300, 400) à commande directe selon la revendication 22, dont ladite pluralité des trous est calibrée pour garantir une poussée produite par la pression sur une surface (A) sur la partie inférieure de la tige d'équilibrage (301), qui est équivalente à la poussée produite par une surface (B) correspondant au diamètre d'étanchéité du noyau mobile (38) ayant le joint (24).

9. Électrovanne (300, 400) à commande directe selon la revendication 1, apte à l'usage dans les environnements explosifs.
